# EUROPEAN PATENT APPLICATION

(11) **EP 4 669 026 A1**
(43) Date of publication of application: **24.12.2025**
(21) Application number: 24194698.7
(22) Date of filing: 15.08.2024
(51) Int. Cl.: H04W 84/12, H04W 84/18, H04W 88/06, H04W 16/10

(54) **METHOD OF OPERATING A DUAL-PAN COMMUNICATION DEVICE**

(30) Priority: 19.06.2024 RO 202400344
(71) Applicant: NXP USA, Inc., Austin, TX 78735 (US)
(72) Inventor: Gucea, Doru Cristian, 5656AG Eindhoven (NL); Stefan, George, 5656AG Eindhoven (NL); Ursescu, Ionu, 5656AG Eindhoven (NL)
(74) Representative: Krott, Michel

(57) **Abstract**

A method of operating a dual-PAN communication device (100), comprises the steps: handling data traffic on a first IEEE 802.15.4 channel and on a second IEEE 802.15.4 channel; using at least one specific service of a WiFi radio (30) to get information about data traffic on the second IEEE 802.15.4 channel. An operation of the dual-PAN communication device (100) is adapted depending on the data traffic on the second IEEE 802.15.4 channel.

## Description

### TECHNICAL FIELD

The present disclosure relates to a method of operating a dual-PAN communication device. Furthermore, the present disclosure relates to a dual-PAN communication device. Furthermore, the present disclosure relates to a computer-implemented method.

### BACKGROUND

A main issue for a single radio IEEE 802.15.4 chip is that it can be active on a single channel at one moment in time. In 802.15.4 dual-mode setups, if it has to handle heavy traffic on one channel, it may lose all the MAC retransmits on the other channel. Eventually, this may lead to peer disconnection and topology reconfiguration.

K. Chebrolu and A. Dhekne, "Esense: Energy Sensing-Based Cross-Technology Communication", IEEE Transactions on mobile computing, Vol. 12, November 2013 discloses a paradigm of communication between devices that have fundamentally different physical layers.

C. Feng and T. Xia, "High-Throughput Cross-Technology Communication via Chip-Level Side Channel", Applied Sciences, 1 June 2022 discloses a Cross-technology communication framework based on ZigBee chip-level side channel.

"HoWiES: A Holistic Approach to ZigBee Assisted WiFi Energy Savings in Mobile Devices", 2013 proceedings IEEE INFOCOM, 14-19 April 2013, discloses a system that saves energy consumed by WiFi interfaces in mobile devices with the assistance of ZigBee radios.

### SUMMARY

A first aspect of the present disclosure is directed to a method of operating a dual-PAN communication device, comprising the steps:
- handling data traffic on a first IEEE 802.15.4 channel and on a second IEEE 802.15.4 channel;
- using at least one specific service of a WiFi radio to get information about data traffic on the second IEEE 802.15.4 channel; and
- adapting an operation of the dual-PAN communication device depending on the data traffic on the second IEEE 802.15.4 channel.

In this way, circumstances regarding data traffic on the second IEEE 802.15.4 channel are known using the WiFi radio. The WiFi radio, as a separate HW/SW entity, communicates with the dual-PAN HW/SW and is used to process additional information in order to adapt the operation of the dual-PAN HW/SW.

A further aspect of the present disclosure is directed to a dual-PAN communication device comprising:
- a first controller being configured to handle data traffic on a first IEEE 802.15.4 channel;
- a second controller being configured to handle data traffic on a second IEEE 802.15.4 channel; and
- a WiFi radio, being configured to get information about data traffic on the second IEEE 802.15.4 channel and to perform the proposed method.

The first and second controllers may be implemented by a Thread controller and a Zigbee controller, respectively, each of them controlling data communication on a single PAN.

In one or more embodiments, IEEE 802.15.4 traffic on the second IEEE 802.15.4 channel is analyzed by the WiFi radio, wherein durations of energy bursts are determined and packet length are deduced therefrom. The WiFi radio is used to sniff 802.15.4 traffic, wherein a packet length is deduced by knowing the modulation scheme of 802.15.4 communication.

In one or more embodiments, the WiFi radio is configured to be operated on a IEEE 802.11 channel that overlaps with a IEEE 802.15.4 channel.

In one or more embodiments, the WiFi radio is configured to overlap at least one of IEEE 802.15.4 channels.

In one or more embodiments, a duration of IEEE 802.14.5 bursts is analyzed and interpreted as channel of 802.15.4. A high probability of detecting e.g. data requests is determined in this way. However, detection of a specific 15.4 packet using the Wi-Fi radio is not limited to data requests packets. If a packet structure is known (e.g. number of bytes of the packet structure) then the airtime required for that packet (e.g. a byte has two symbols and one symbol takes 16µs airtime in 15.4 modulation) can be computed.

In one or more embodiments, a preamble detection is used by the WiFi receiver in order to detect a 802.15.4 preamble. In this way, a 802.15.4 packet is identified by its specific preamble.

In one or more embodiments, the at least one specific service of the WiFi receiver is enabled or disabled depending on data traffic on the second IEEE 802.15.4 channel.

In one or more embodiments, the operation of the dual-PAN communication device using the information of the WiFi receiver is controlled by a controller of the dual-PAN communication device (100). Said dual-PAN controller can take some decisions, e.g. switch from one 802.15.4 channel to another 802.15.4 channel.

### BRIEF DESCRIPTION OF DRAWINGS

The above discussion/summary is not intended to describe each embodiment or every implementation of the present disclosure. The drawings and detailed description that follow also exemplify various embodiments. The aspects defined above and further aspects of the present disclosure are apparent from the examples of embodiment to be described hereinafter with reference to the appended drawings, which are explained with reference to the examples of embodiment. However, the disclosure is not limited to the examples of embodiment.

All illustrations in the drawings are schematical. It is noted that in different figures, similar or identical elements or features are provided with the same reference signs or with reference signs that are different from the corresponding reference signs only within the first digit. In order to avoid unnecessary repetitions, elements or features which have already been elucidated with respect to a previously described embodiment are not elucidated again at a later position of the description.

Various example embodiments may be more completely understood in consideration of the following detailed description in connection with the accompanying drawings, in which:
- FIG. 1: shows parameters to control a dual-PAN communication device;
- FIG. 2: is a diagram illustrating an IEEE 802.15.4 frame structure;
- FIG. 3: is a diagram showing an arrangement with a dual-PAN communication device operation two PANs;
- FIG. 4: is a diagram with data traffic in the arrangement of FIG. 3;
- FIG. 5: is a diagram showing an overlapping of IEEE 802.11 and IEEE 802.15.4 channel frequencies;
- FIG. 6: is an illustration of an IEEE 802.15.4 preamble detection;
- FIG. 7: is a is a diagram with data traffic in the arrangement of FIG. 3 using the proposed method; and
- FIG. 8: is a diagram showing the principal flow of the proposed method.

While various embodiments discussed herein are amenable to modifications and alternative forms, aspects thereof have been shown by way of example in the drawings and will be described in detail. It should be understood, however, that the intention is not to limit the disclosure to the particular embodiments described. On the contrary, the intention is to cover all modifications, equivalents, and alternatives falling within the scope of the disclosure including aspects defined in the claims. In addition, the term "example" as used throughout this application is only by way of illustration and not limitation.

### DESCRIPTION OF EMBODIMENTS

Aspects of the present disclosure are believed to be applicable to a variety of different types of devices, apparatuses, systems and methods involving voltage controlled devices formed as frequency synthesizers. While not necessarily so limited, various aspects may be appreciated through the following discussion of non-limiting examples which use exemplary contexts.

In the following description various specific details are set forth to describe specific examples presented herein. It should be apparent to one skilled in the art, however, that one or more other examples and/or variations of these examples may be practiced without all the specific details given below. In other instances, well known features have not been described in detail so as not to obscure the description of the examples herein. For ease of illustration, the same reference signs may be used in different diagrams to refer to the same elements or additional instances of the same element. Also, although aspects and features may in some cases be described in individual figures, it will be appreciated that features from one figure or embodiment can be combined with features of another figure or embodiment even though the combination is not explicitly shown or explicitly described as a combination.

Hereinafter, "802.15.4" and "802.11" are used to refer to the IEEE 802.15.4 and IEEE 802.11 communication protocols, respectively.

Wireless radio transceivers designed for 802.15.4 applications allow a device to associate to one and only one personal area network (PAN) at any given time. The packet processor includes hardware support for a device to reside on two networks simultaneously. In optional dual-PAN mode, the device will alternate between the two PAN's, under hardware or software control. Hardware support for dual PAN operation consists of two sets of PAN and IEEE addresses for the device, two different channels (one for each PAN), a programmable timer to automatically switch PAN's (including on-the-fly channel-changing) without software intervention, control bits to configure and enable dual PAN mode, and read-only bits to monitor status in dual PAN mode. A device can be configured to be a PAN coordinator on either network, both networks, or neither network.

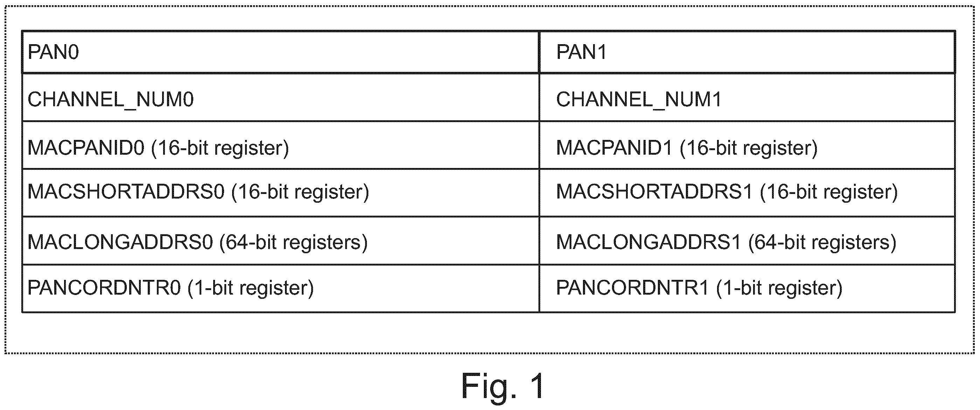

To define a "PAN" in the context of dual PAN mode, two sets of network parameters are maintained. Hereinafter, "PAN0" and "PAN1" will be used to refer to the two different PANs. PAN0 may be a thread-PAN and PAN1 may be a Zigbee-PAN. FIG. 1 shows dual PAN parameters, wherein the parameters can be used to make some decisions, e.g. each parameter set uniquely identifies a PAN for dual PAN mode. 802.15.4 supports two PANs which can be selected via several dual PAN parameters as shown in FIG. 1, wherein each PAN has its own set of registers. CHANNEL_NUM (0/1) may be used for tuning the Wi-Fi radio on an overlapping frequency. A PAN describes parameters for a specific 802.15.4 network. A PAN is described by specific channels, by specific MAC PAN ID, which is a 16 bit number that represents the PAN-Identifier (PAN-ID). A device being part of a PAN needs a 802.15.4 short address and a 802.15.4 long address.

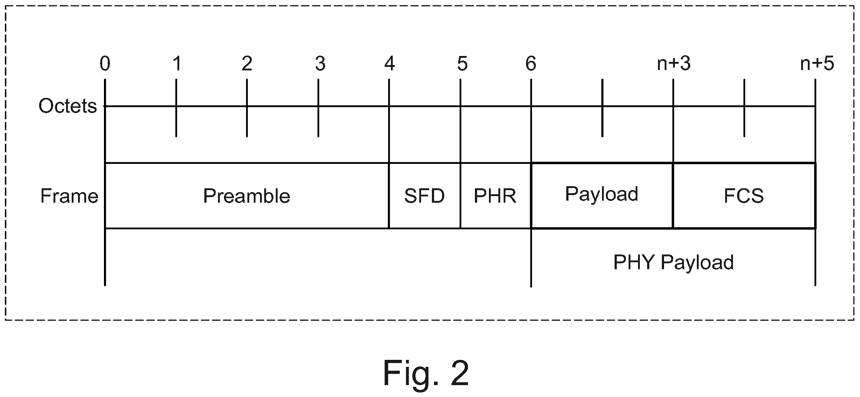

FIG. 2 shows an IEEE 802.15.4 frame structure, having the following fields:
- Preamble: preamble bytes
- SFD: short frame delimiter
- PHR: Physical layer header
- Payload: payload bytes
- FCS: frame check sequence

While current implementations have large dwell timeouts and a detection condition based on SFD, next generations will feature much smaller dwell times and improved detection conditions:
- minimum dwell-time quanta of 16 microseconds for dwell time
- fast sync detection: extend the lock up (by dwell time or a multiple of dwell time) on one PAN if one byte of the preamble is detected
- channel switching time of only 30us
- preamble detection algorithm can be done in 62us
- 30µs switching time
- 32µs for fast sync detection

All the above features increase the probability of receiving an 802.15.4 frame for a radio that is continuously scanning for incoming frames on two different channels. Fast channel switching and the ability to lock on a PAN once a preamble byte is detected guarantee that even if two 802.15.4 frames are received in parallel on two channels and their preambles overlap, at least one packet is received.

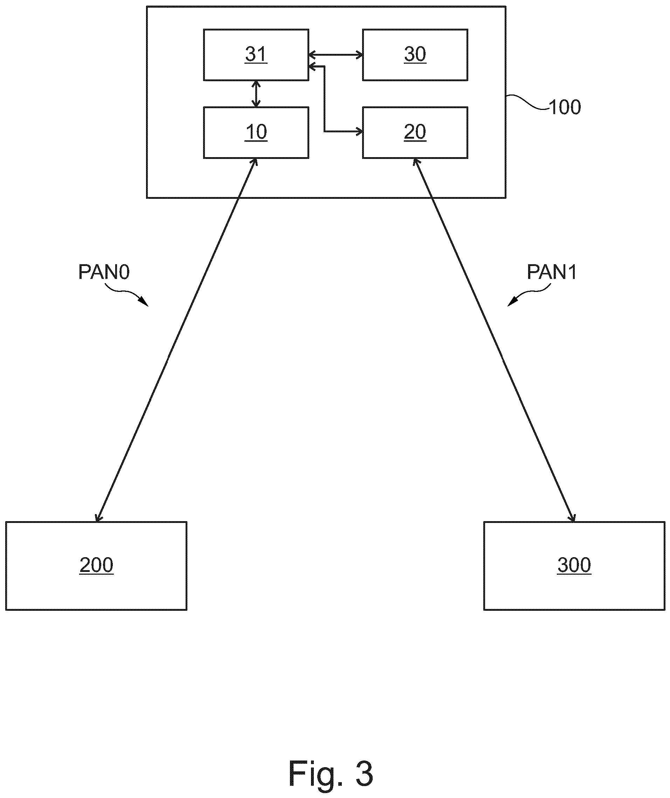

FIG. 3 shows an arrangement with a dual PAN communication device (border router) 100 running a first controller 10 (thread leader) on channel 11 and a second controller 20 (Zigbee coordinator) on channel 12. The border router 100 may also contain a separate HW/SW entity representing the Wi-Fi HW/SW, wherein the dual-PAN HW/SW interfaces with the Wi-Fi radio 30. A first end-device 200 (thread sleepy end device, SED) and a second end-device 300 (Zigbee end device, ZED) are connected to the corresponding parent devices 10, 20. The WiFi radio 30 thus represents a separate HW/SW entity and is not used in the arrangement of FIG. 3. In this way the dual-PAN border router 100 controls two wireless personal area networks PAN0, PAN1 between the dual PAN border router 100 and the end-devices 200, 300, respectively.

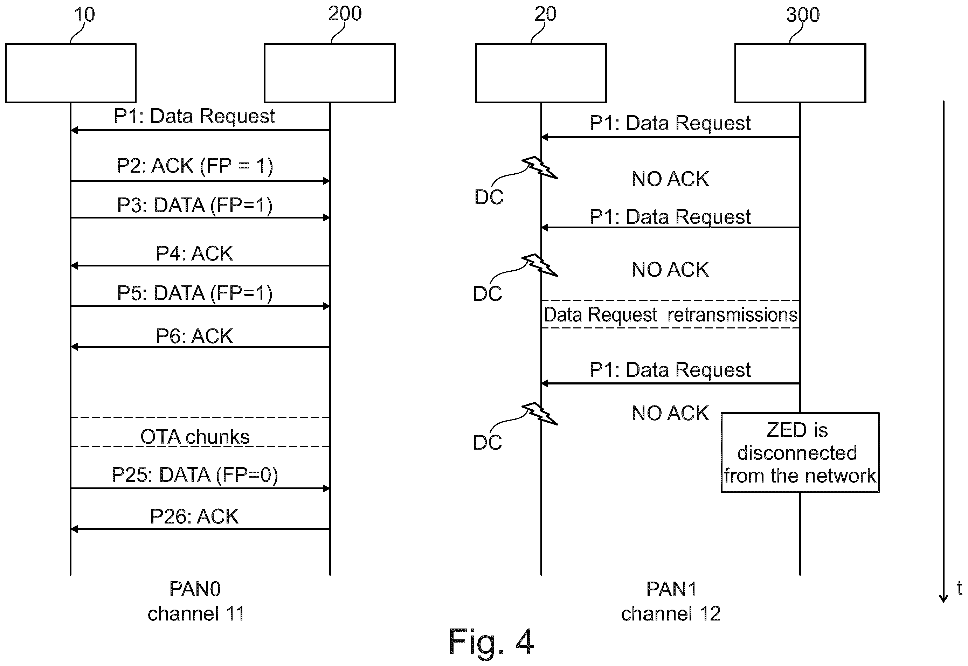

FIG. 4 shows a conventional way of handling the two PANs (PAN0, PAN1) with a time axis t from top to bottom, wherein the dual-PAN border router 100 at a specific time is able to transmit 802.15.4 packets only on a single channel, e.g. channel 11 of PAN0 or channel 12 of PAN1. FIG. 4 illustrates a use-case where data communication over-the-air (OTA) is started in PAN1, wherein the thread is on PAN0 and Zigbee is on PAN1. On thread, it is assumed that the parent has buffered for its child at least one 1280-octet IPv6 datagram, this is feasible and it's a minimum resource requirement for a parent device in a thread network. In order to drain the thread parent queue, more than ten maximum length (127 bytes) 802.15.4 packets must be received. The bigger the packet is, the more time it takes to be transmitted and received. As can be seen in FIG. 4, while sending one large OTA packet (e.g. P3 + ACK needs > 4ms airtime) two data request packets P1, P2 may be missed on channel 12 (one data request packet needs appr. 2ms airtime).

The coordinator has received packets on channel 11 (e.g. large OTA chunks). However, the packets on channel 12 have not been received, because the 802.15.4 radio was set to channel 11. As a consequence, packets could not have been received by the coordinator, because both the thread parent 10 and Zigbee coordinator 20 are using the same single 802.15.4 radio for their operations on two different channels (channels 11 and 12). Hence, the Zigbee child (second end device 300) is disconnected from PAN 1(channel 12) after several data request packets are not ACK'ed.

In the following, an on-air-time is calculated for a 802.15.4 data packet. For example, if the packet P3 contains 127 bytes: 127 bytes * 2 (symbols)) * 16 (each symbol needs 16µs for being sent to the air). Thus, the packet P3 is 4.064 µs time on-air only for the payload bytes. However, in addition to the payload bytes, also the packet header and the preamble need to be sent:
SHR + PHY HDR = (6 * 2 (symbols)) * 16 = 192 µs + 192 µs for the immediate ACK plus time on air required for the immediate/enhanced ACK (acknowledgement).

Summarizing, it takes > 4.5 ms on-air time for a maximum length 802.15.4 frame + immediate ACK. However, if the enhanced ACK also contains data, the on-air time can even double. Using current Zigbee stack configuration, a data poll is retransmitted three times at MAC layer: Size of a Zigbee Data Request packet is 12 bytes => (12 + 6 (SHR+ PHR) + 6 (IFS))* 2 (symbols) * 3 (packets) * 16us = 2034us (+ AIFS for each).

As a consequence, while receiving the large 127 byte frame on PAN0, all three packets P1 of the data poll on PAN1 may be missed. If this happens, there occurs another three retransmits of the data poll from the Zigbee network layer. Even so, the radio will be locked into PAN1 for draining the remaining OTA chunks, so there is a high possibility of losing all the retransmits of the data poll in the Zigbee Network PAN1, which may lead to disconnection of the second end device (ZED device) 300. Data poll lost on PAN1 is used only for illustrative purpose, for any other 802.15.4 frame type the problem still persists.

One recognizes, that if radio stays on one channel for receiving large OTA packets while all the short data polls from the other channel are missed. While the radio stays on one 802.15.4 channel for receiving large packets, it has no idea of what happens on the other 802.15.4 channel. With current hardware, the radio stays on the PAN until the complete receipt of a chunk: if a chunk (OTA) has 127 bytes, then the radio stays appr. 4ms on that channel. During these appr. 4ms it has no idea of what happens on the other PAN, and it may be that on the other PAN all the short Data Requests (initial transmission + retransmissions) are lost and if these happens the device will get disconnected. That means that the dual-PAN border router 100 is "blind" at specific times, for what happens on the other channel.

In summary, the main issue in dual-PAN scenarios on different channels for chips with a single radio is that no information is available about what happens on another PAN if heavy traffic exists on one PAN.

It is proposed that the dual-PAN border router 100 may abandon the receipt of the large OTA chunk for switching to the other PAN and receiving one of the retransmits of the short data poll. Afterwards, it can switch back to the initial PAN for receiving the retransmit of large OTA chunk. In this way, the chances of receiving a layer-2 retransmit from any PAN are greatly improved.

Other similar examples can be envisaged, e.g. short frames are received on PAN0 but this overlaps with the transmission of preambles on PAN1. With current mechanisms, if a PAN on a specific channel is in progress of receiving data then it has no idea of what happens on a different-channel PAN. With the proposed method it is known and different algorithms can be applied for maximizing the chances of receiving at least a retransmission of a frame on any PAN.

The proposed method uses the WiFi radio 30 of the dual-PAN border router 100 in a specific way. Given that most of the dual-PAN solutions are installed on border routers where a IEEE 802.11 radio (WiFi radio 30) is also available, it is suggested to augment the information available to the 802.15.4 logic with additional information provided by the energy sensing of the WiFi radio 30. In more detail, to augment the information available to the 802.15.4 radio, such that it can make better informed decisions while switching to the other 802.15.4 channel. These informed decisions will help a dual-PAN controller 31 of the dual-PAN border router 100 to avoid losing all the MAC retransmits on the other channel.

In this context, it is proposed to determine the duration of an energy burst, which helps the WiFi radio 30 to differentiate between 802.11 WiFi frames (short in duration) and 802.15.4 frames (longer in duration). An 802.15.4 radio that is currently on PAN0 can use the information provided by the WiFi radio 30 to get a better understanding of what happens on PAN1. Using this information, the 802.15.4 logic of the dual-PAN controller 31 of the dual-PAN border router 100 may decide to switch earlier/later to the other PAN to minimize the chances of triggering an application level retransmit from either PAN.

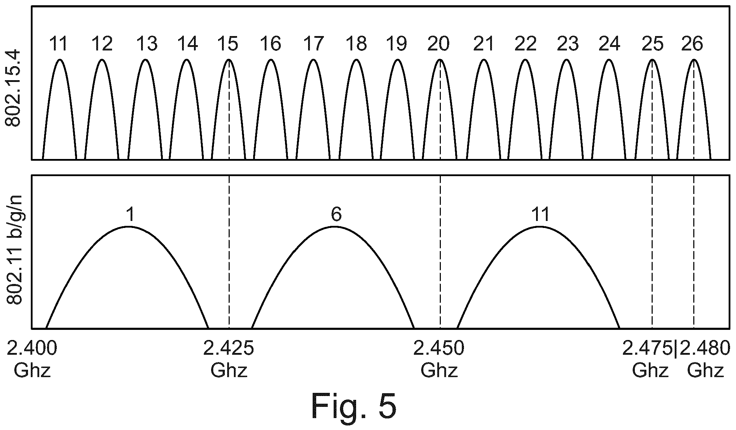

FIG. 5 shows an overlapping between 802.11 and 802.15.4 channels. The width of channels in WiFi is larger than a width of channels in 802.15.4. One recognizes, that channel 1 of WiFi overlaps with four channels of 802.15.4 (channels 11, 12, 13 and 14), channel 2 of WiFi overlaps with four channels of 802.15.4 (channels 16, 17, 18 and 19), and so on. If 802.15.4 uses channels 11 and 16, WiFi channel 1 can be used to get information of channel 11 of 15.4, WiFi channel 6 can be used to get information about 802.15.4 channel 16.

802.15.4 logic calls this function for announcing the WiFi access point to identify the 802.15.4 channels for which additional information is needed. Nothing needs to be done if WiFi channel 1 or 2 overlaps with the already set 802.11 Wi-Fi access point channel. Also, in case channel 1 or channel 2 is 15, 20, 25, or 25, nothing needs to be done. In case neither channel 1 nor channel 2 overlaps with the already set 802.11 Wi-Fi AP channel and both channels are different than 15, 20, 25, 26; then the already set WiFi access point channel should be changed to one that overlaps with either channel 1 or channel 2.

Switching between channels may be performed using standard 802.11 mechanisms like "Channel Switch" (shown in section 6.3.17 of IEEE 802.11-2016 spec) or "Extended channel switch announcement" (shown in section 6.3.37 of IEEE 802.11-2016 spec). Main reason for trying to have one of the 802.15.4 overlapping with the 802.11 Wi-Fi AP channel is to avoid disrupting the 802.11 traffic each time the 802.15.4 logic needs information for either channel1 or channel2. Light Wi-Fi traffic must be possible even when doing energy scanning for 802.15.4 frames.

The following shows a proposed signaling on a communication channel between the 802.15.4 and the WiFi radio 30 in more detail.
start_802_15_4_operation_on_channel_1 (time)

This operation should be asserted by 802.15.4 logic as long as the 802.15.4 radio has an ongoing RX/TX/energy detect on channel 2. The time parameter represents the minimum amount of time that the 802.15.4 is expected to stay in RX/TX. Nothing needs to be done if channel 1 overlaps with the already set 802.11 Wi-Fi AP channel.

The WiFi access point should send CTS-to-self with a NAV large enough to accommodate the time parameter. Also, there will be no answer to RTS requests (see e.g. section 6.3, "DCF" of IEEE 802.11-2016 spec).

It is required for reducing the 802.11 traffic such that 802.15.4 traffic detection is improved. Otherwise, the WiFi access point channel needs to be switched to a channel that overlaps with channel 1. WiFi radio 30 may be put in clear channel assessment mode (CCA mode) and may have a way of exposing information related to current energy level and possible 802.15.4 transmission detection.
start_802_15_4_operation_on_channel_2 (time)
like start_802_15_4_operation_on_channel_1 (time), as described above.
stop_802_15_4 operation_on_channel_1
802.15.4 logic may decide to abort TX/RX/energy detect on channel 1 if this may lead to too many missed packets on channel_2. In this case, the Wi-Fi energy sensing on channel_1 may be terminated sooner than indicated by the time parameter.
stop_802_15_4_operation_on_channel_2
similar to stop_802_15_4_operation_on_channel_1, as described above.

WiFi radio 30 could be configured to any RF frequency, not only the center frequencies of WiFi channels 1, 6, and 11. If this is not already true, the WiFi channel should be switched to one that overlaps with the dual-PAN channel(s).

A communication mechanism between the WiFi radio 30 and the dual-PAN controller 31 of the dual-PAN border router 100 blocks could be designed specifically for this. Of course, this may influence the WiFi traffic but as described, there are several methods that can be used for mitigating the impact. In the case that the 2.4 GHz WiFi is not used at all, WiFi energy detect/15.4 preamble detect using WiFi radio 30 can be used on demand, CTS-to-self for decreasing the Wi-Fi traffic, others.

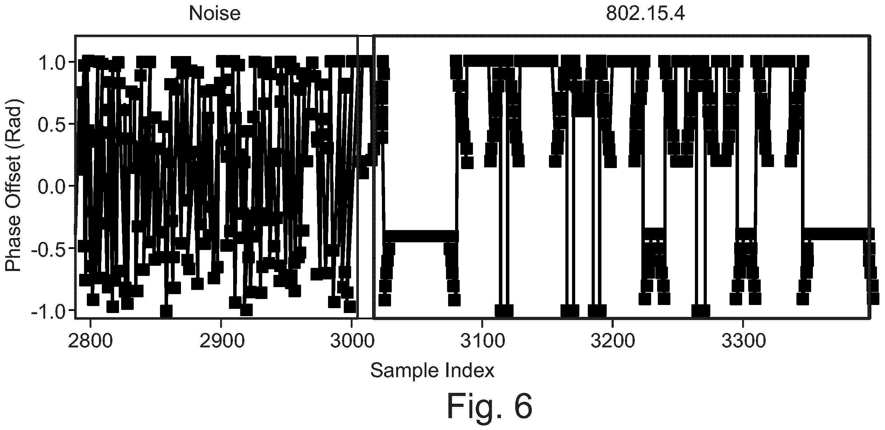

As shown in FIG. 6, a preamble detection algorithm can detect if an 802.15.4 preamble (right section of FIG. 6) is being received by the WiFi radio 30. All this extra information that the WiFi radio 30 needs to provide to the 802.15.4 radio affects WiFi traffic. However, the proposed method could be applied to WiFi(s) which have separate radios for 2.4 GHz and 5 GHz operations. Given, that a lot of things are moving to 5 GHz, the 2.4 GHz radio could be used for this kind of use-case. Even if this is not true, WiFi radio 30 can still TX/RX regular WiFi traffic and in the idle periods it can report energy sensing duration/802.15.4 preamble detection to the 15.4 radio.

2.4 GHz may be very crowded and the WiFi may "see" energy from multiple 802.15.4 channels/Wi-Fi(s)/BLE. However, listen before talk should help in some use-cases, also filtering on the duration of energy sensing + WiFi preamble detection will make a difference.

The Wi-Fi radio 30 may have two separate RX paths, if this happens then one of the RX paths is usually set to operate on the 2.4 GHz frequency while the other RX path is set to operate on the 5Ghz frequency. If this is true, then the impact on using the 2.4Ghz frequency of the Wi-Fi radio for dual-PAN operations is lower - that's because we expect most of the Wi-Fi traffic to happen on the 5Ghz frequency (and to use the corresponding Wi-Fi RX path).

Of course that this may influence the Wi-Fi traffic but as described there are several methods that can be used for mitigating the impact: maybe the 2.4Ghz Wi-Fi is not used at all (as more and more traffic is moving to 5Ghz nowadays - with the condition of having different RX paths), Wi-Fi energy detect/15.4 preamble detect using Wi-Fi can be used only on demand, CTS-to-self for decreasing the Wi-Fi traffic, others.

The extra information that the Wi-Fi needs to provide to the 15.4 radio affects Wi-Fi traffic, however, the proposed method could be applied to Wi-Fi(s) which have separate radios for 2.4 GHz and 5 GHz operations. Given that a lot of things are moving to 5 GHz, the 2.4 GHz radio could be used for this kind of use-case. Even if this is not true, Wi-Fi radio can still TX/RX regular Wi-Fi traffic and in the idle periods it can report energy sensing duration/802.15.4 preamble detection to the 15.4 radio.

One WiFi channel overlaps with four adjacent IEEE 15.4 channels, so during energy/preamble detect as having been described above, it may not be known if the "sensed" packet belongs to the desired PAN. However, carrier sense multiple access/collision avoidance (CSMA/CA) should also work for the four adjacent 15.4 and only one channel should transmit. In this case, historical data related to link quality indicator (LQI) can be used for detecting if "sensed" packet is the one that we were looking for. This can be augmented with the length of the "sensed" packet, e.g. the duration of an energy burst for a data request packet is known.

Assumption is that the WiFi 2.4 GHz traffic is low enough to allow enough opportunity for IEEE 15.4 preamble detection using the WiFi radio 30. This can be done using energy detection or looking for special patterns when IEEE 15.4 preamble patterns are being fed to the Wi-Fi preamble autocorrelation block, which is a typical implementation choice for WiFi preambles. By means of the proposed method, the packet length from the duration of an energy burst can be computed if the transfer rate is known.

With respect to the Dual-PAN border router 100 setup, most of the 2.4 GHz spectrum would be crowded with 802.11 messages and 802.15.4 messages. A challenge for the WiFi radio 30 would be to detect with a high probability when the medium is busy with an 802.15.4 packet. Usage of the CTS-to-self mechanism (if the 802.11 Wi-Fi AP channel overlaps with the 802.15.4 channel) should decrease the amount of 802.11 traffic, as known in literature. WiFi traffic has a bimodal pattern: packets are either large packets (1500 bytes) sent at high data rates or small management packets sent at lower data rates. As known from "HoWiES: A Holistic Approach to ZigBee Assisted WiFi Energy Savings in Mobile Devices" > 95% packets on Wi-Fi have an airtime less than 1 millisecond. This means that an 802.15.4 packet greater than 32bytes will have an air duration larger than 95% of the Wi-Fi traffic.

When searching for a specific 802.15.4 message, like the data request in our case (768µs airtime), a searching can be done for energy bursts with a duration equal to that of the data requests. Considering that the 802.15.4 radio is on the other PAN, then no ACK follows this energy bursts if the data request destination is the dual-PAN border router 100. Multiple energy bursts, similar in duration, should be observed for the retransmissions of this data request message and thus increasing the probability for deducing that this is the packet which is searched for.

A reduction of false positives can be done in the following way: if immediately after the data request (192µs) it is seen that an energy burst corresponding to the ACK duration (e.g. an immediate ACK has 11 octets => an energy burst of 352µs) then it can be assumed, that this packet was not destined for the dual-PAN border router 100.

FIG. 6 shows an illustration of how a 802.15.4 signal is observed at WiFi preamble detection according to the following rule: When WiFi preamble detection receives a 802.15.4 signal the values of the phase offset in the stable periods are II and - 2*Π/5. A preamble is sent at the beginning of each 802.15.4 packet. A 802.15.4 preamble is a sequence of four bytes of 0. Each 0 byte corresponds to two "0" symbols. "0" symbol is encoded with the following chips sequence: "1101 1001 1100 0011 0101 0010 0010 1110". Chips with even index are modulated into I-phase while chips with odd index are modulated into Q-phase.

| | |
|---|---|
| I phase: | 1 0 1 0 1 0 0 1 0 0 0 1 0 1 1 1 |
| Q phase: | 1 1 0 1 1 0 0 1 1 1 0 0 0 0 1 0 |

When two consecutive chips on I-phase are the same and two consecutive chips on Q-phase are the same, there would be a stable period of II/5. When two consecutive chips on I-phase are different and two consecutive chips on Q-phase are different there would be a stable period of -2 * Π/5.

So, each "0" symbol has a stable period of (-2 * Π/5) for 6µs, followed by a stable period of II/5 for 2µs. Entire 802.15.4 preamble will have this pattern repeated for 8 times. This should help the WiFi radio 30 to detect when an 802.15.4 preamble is received, and this information could be combined with the energy level for inferring on whether the scanned energy corresponds to an 802.15.4 packet. When two consecutive chips on I-phase are the same and two consecutive chips on Q-phase are the same, there would be a stable period of Π/5. When two consecutive chips on I-phase are different and two consecutive chips on Q-phase are different, there would be a stable period of -2 * Π/5. So there are two stable periods of (-2 * Π/5) (one for 4us, another one for 2us) + one stable period of Π/5 for 2µs. The entire 802.15.4 preamble will have this pattern repeated for 8 times. This enables the WiFi radio 30 to detect when an 802.15.4 preamble is received, and this information could be combined with the energy level for inferring on whether the scanned energy corresponds to an 802.15.4 packet.

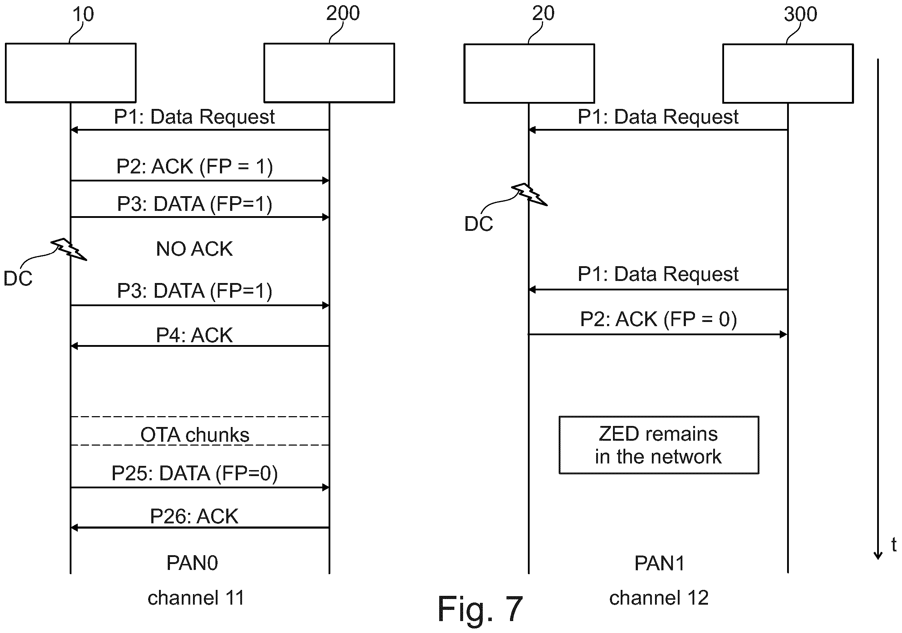

FIG. 7 shows a reception on one single PAN, using the WiFi radio 30 of the dual-PAN border router 100 for energy sensing and carrier sensing in the above mentioned way. An optimization is for the case when RX is aborted on a specific 802.15.4 PAN because activity was detected on the other PAN. There is no need to use the WiFi radio 30 until switching back to the original PAN for receiving the retransmit of the aborted RX frame.

With respect to PAN0, messages P1, P3 indicate that IEEE 802.15.4 radio is on RX on thread PAN, WiFi radio 30 is doing energy sensing on Zigbee PAN (PAN1).

With respect to PAN1, P2 from the Wi-Fi 802.11 logic IEEE 802.15.4 signal detected having a duration of 352µs (Data Requests). No energy burst corresponding to the 802.15.4 ACK is detected on the Zigbee PAN.

The 15.4 radio starts receiving P3 on channel 11 and the Wi-Fi radio 30 is asked to do energy sensing/15.4 preamble detection on channel 12. The WiFi radio 30 provides additional information related to channel 12 to the 15.4 radio: there is a high probability of an on-going data request packet (P1/channel 12) that is not ACK'ed. But its retransmissions are received, because a smart switching to channel 12 is done with the information provided by the WiFi radio 30 in the above illustrated way. The dual-PAN radio is switching to channel 12 in order to receive the retransmits of P1. The retransmissions of the missed packets of initial packet P1 (data request) of channel 12 802.15.4 radio results in aborting RX on the thread PAN (PAN0, no ACK for first P3 frame) and to start scanning for packets on the Zigbee PAN (PAN1).

802.15.4 radio may stay more on the Zigbee PAN, until it knows for sure that the large OTA chunk was transmitted on the Thread PAN, and move to thread PAN closer to the moment of P3 retransmit (low power optimization as the 802.11 radio doesn't need to be used until return). As a result, the second end device 300 (ZED device) remains in the network.

The proposed method may increase electric power consumption. One possible optimization would be to avoid using the WiFi radio 30 for the continuous scanning mode/Auto PAN Switch and use it only when there is an on-going reception/transmission on the 802.15.4 radio (Receiving on one PAN).

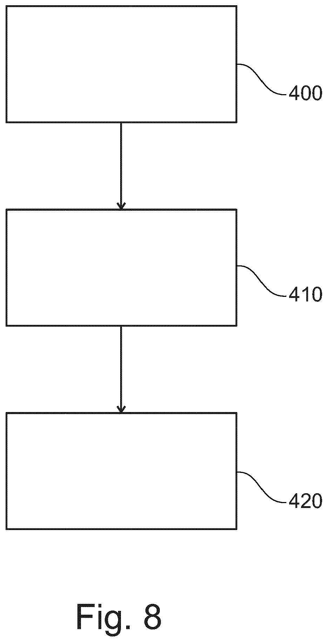

FIG. 8 shows a principal flow of the proposed method.

In a step 400 a data traffic on a first IEEE 802.15.4 channel and on a second IEEE 802.15.4 channel is handled.

In a step 410 at least one specific service of a WiFi radio 30 is used to get information about data traffic on the second IEEE 802.15.4 channel.

In a step 420 an operation of the dual-PAN communication device 100 is adapted depending on the data traffic on the second IEEE 802.15.4 channel.

In the foregoing, an exemplary scenario is illustrated with two 802.15.4 channels. In more detail, a first and a second 802.15.4 channel, wherein the Wi-Fi radio 30 is used for analyzing traffic on the second 802.15.4 channel. Needless to say, that there are alternative scenarios, which may be implemented with the proposed method, where the Wi-Fi radio 30 can also be used for analyzing traffic on the first 802.15.4 channel.

Therefore, where the specification refers to a "first" type of structure or a "second" type of structure, the adjectives "first" and "second" are not used to connote any description of the structure or to provide any substantive meaning; rather, such adjectives are merely used for English-language antecedence to differentiate one such similarly-named structure from another similarly-named structure.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code, or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and producing thereby a result in the form of information or signals (an output). Depending on the context, the term "computer" will mean either a processor in particular or more generally a processor in association with an assemblage of interrelated elements contained within a single case or housing.

Based upon the above discussion and illustrations, those skilled in the art will readily recognize, that various modifications and changes may be made to the various embodiments without strictly following the exemplary embodiments and applications illustrated and described herein. For example, methods as exemplified in the Figures may involve steps carried out in various orders, with one or more aspects of the embodiments herein retained, or may involve fewer or more steps.

It should be noted that the term "comprising" does not exclude other elements or steps and "a" or "an" does not exclude a plurality. Also elements described in association with different embodiments may be combined. It should also be noted, that reference signs in the claims should not be construed as limiting the scope of the claims.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

It has to be noted that embodiments have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

### Reference signs:

- 10: first controller
- 20: second controller
- 30: WiFi radio
- 31: dual-PAN controller
- 100: border router
- 200: first end device
- 300: second end device
- 400..420: method steps

## Claims

1. A method of operating a dual-PAN communication device (100), comprising the steps:
- handling data traffic on a first IEEE 802.15.4 channel and on a second IEEE 802.15.4 channel;
- using at least one specific service of a WiFi radio (30) to get information about data traffic on the second IEEE 802.15.4 channel; and
- adapting an operation of the dual-PAN communication device (100) depending on the data traffic on the second IEEE 802.15.4 channel.

2. The method according to claim 1, wherein IEEE 802.15.4 traffic on the second IEEE 802.15.4 channel is analyzed by the WiFi radio (30), wherein durations of energy bursts are determined and packet length are deduced therefrom.

3. The method according to claim 1 or 2, wherein the WiFi radio (30) is configured to be operated on a IEEE 802.11 channel that overlaps with a IEEE 802.15.4 channel.

4. The method according to claim 3, wherein the WiFi radio (30) is configured to overlap at least one of IEEE 802.14.5 channels.

5. The method according to any of the preceding claims, wherein a duration of IEEE 802.14.5 bursts is analyzed and interpreted as channel of IEEE 802.15.4.

6. The method according to any of the preceding claims, wherein a preamble detection is used by the WiFi radio (30) in order to detect a 802.15.4 preamble.

7. The method according to any of the preceding claims, wherein the at least one specific service of the WiFi radio (30) is enabled or disabled depending on data traffic on the second IEEE 802.14.5 channel.

8. The method according to any of the preceding claims, wherein the operation of the dual-PAN communication device (100) using the information of the WiFi radio (30) is controlled by a controller (31) of the dual-PAN communication device (100).

9. A dual-PAN communication device (100), comprising:
- a first controller (10) being configured to handle data traffic on a first IEEE 802.15.4 channel;
- a second controller (20) being configured to handle data traffic on a second IEEE 802.15.4 channel; and
- a WiFi radio (30), being configured to get information about data traffic on the second IEEE 802.15.4 channel and to perform the method according to any of the preceding claims.

10. A computer-implemented method comprising executable instructions which, when executed by a dual-PAN communication device (100) cause said dual-PAN communication device (100) to carry out the method of claims 1 to 8.

## Amended claims

### Amended claims in accordance with Rule 137(2) EPC.

1. A method of operating a dual-PAN communication device (100), comprising the steps:
- handling data traffic on a first IEEE 802.15.4 channel and on a second IEEE 802.15.4 channel;
- using at least one specific service of a WiFi radio (30) to get information about data traffic on the second IEEE 802.15.4 channel; and
- adapting an operation of the dual-PAN communication device (100) depending on the data traffic on the second IEEE 802.15.4 channel, wherein IEEE 802.15.4 traffic on the second IEEE 802.15.4 channel is analyzed by the WiFi radio (30), wherein durations of energy bursts are determined and packet length are deduced therefrom.

2. The method according to claim 1 , wherein the WiFi radio (30) is configured to be operated on a IEEE 802.11 channel that overlaps with a IEEE 802.15.4 channel.

3. The method according to claim 2, wherein the WiFi radio (30) is configured to overlap at least one of IEEE 802.14.5 channels.

4. The method according to any of the preceding claims, wherein a duration of IEEE 802.14.5 bursts is analyzed and interpreted as channel of IEEE 802.15.4.

5. The method according to any of the preceding claims, wherein a preamble detection is used by the WiFi radio (30) in order to detect a 802.15.4 preamble.

6. The method according to any of the preceding claims, wherein the at least one specific service of the WiFi radio (30) is enabled or disabled depending on data traffic on the second IEEE 802.14.5 channel.

7. The method according to any of the preceding claims, wherein the operation of the dual-PAN communication device (100) using the information of the WiFi radio (30) is controlled by a controller (31) of the dual-PAN communication device (100).

8. A dual-PAN communication device (100), comprising:
- a first controller (10) being configured to handle data traffic on a first IEEE 802.15.4 channel;
- a second controller (20) being configured to handle data traffic on a second IEEE 802.15.4 channel; and
- a WiFi radio (30), being configured to get information about data traffic on the second IEEE 802.15.4 channel and to adapt an operation of the dual-PAN communication device (100) depending on the data traffic on the second IEEE 802.15.4 channel, wherein the WiFi radio (30) is configured to analyze IEEE 802.15.4 traffic on the second IEEE 802.15.4 channel, wherein durations of energy bursts are determined and packet length are deduced therefrom; the dual-PAN communication device (100) being configured to perform the method according to any of the preceding claims.

9. A computer program comprising instructions which, when the computer program is executed by a computer of a dual-PAN communication device (100) cause said computer of said dual-PAN communication device (100) to carry out the method of claims 1 to 7.
